# EUROPÄISCHE PATENTSCHRIFT

(11) **EP 2 679 969 B1**
(45) Veröffentlichungstag und Bekanntmachung des Hinweises auf die Patenterteilung: **01.10.2014**
(21) Anmeldenummer: 13173441.0
(22) Anmeldetag: 24.06.2013
(51) Int. Cl.: G01K 1/20

(54) **Vorrichtung zur Erfassung der Temperatur in einem Raum und ein Verfahren zur Herstellung einer solchen Vorrichtung**
Device for detecting the temperature in a room and a method for producing such a device
Dispositif d'enregistrement de la température dans une pièce et procédé de fabrication d'un tel dispositif

(30) Priorität: 25.06.2012 DE 102012105534
(43) Veröffentlichungstag der Anmeldung: 01.01.2014
(73) Patentinhaber: SUMIDA flexible connections GmbH, 01454 Radeberg (DE)
(72) Erfinder: Röder, Jürgen, 34393 Grebenstein (DE)
(74) Vertreter: Carlsohn, Alexander

(56) Entgegenhaltungen:
- EP-A2- 1 457 365
- EP-B1- 2 199 125
- WO-A1-2006/084392
- DE-B3- 10 312 077

## Beschreibung

Die Erfindung betrifft eine Vorrichtung zur Erfassung der Temperatur in einem Raum, insbesondere im Innenraum eines Fahrzeuges, und ein Verfahren zu ihrer Herstellung.

Aus DE 103 12 077 B3 ist eine Vorrichtung zur Ermittlung der Temperatur bekannt, die einen ersten Temperaturfühler, einen zweiten Temperaturfühler und einen Sonnensensor zur Ermittlung der Sonnenstrahlung umfasst. Der erste Temperaturfühler und der Sonnensensor sind in einem gemeinsamen Gehäusesegment angeordnet, das sich in einer Öffnung in der Frontblende eines Klimaanlagen-Steuergerätes befindet, die an den Innenraum des Fahrzeuges angrenzt und mit einem Ende in den Innenraum des Fahrzeuges hineinragt. In diesem Ende befinden sich der erste Temperaturfühler, der die Temperatur in einem an diesen angrenzenden Messbereich im Innenraum des Fahrzeuges erfassen soll, und der Sonnensensor, der die Intensität der in diesem Messbereich einfallenden Sonnenstrahlung erfassen soll. Der Sonnensensor soll eine Kompensation des Messsignals des ersten Temperaturfühlers ermöglichen, das aufgrund der Einstrahlung der Sonne und der daraus folgenden Erwärmung der Frontblende verfälscht sein könnte. Der zweite Temperaturfühler ist nicht in dem Gehäusesegment angeordnet, in dem sich der erste Temperaturfühler und der Sonnensensor befinden. Vielmehr ist er im Inneren des Steuergeräte-Gehäusesegments angeordnet und soll die Eigenerwärmung des Steuergerätes erfassen. Eine Verfälschung des Messsignals des ersten Temperaturfühlers durch die Eigenerwärmung des Steuergerätes soll mittels des zweiten Temperaturfühlers kompensiert werden.

Bei dem ersten Temperaturfühler handelt es sich beispielsweise um ein NTC-Widerstandselement, bei dem Sonnensensor um eine Photodiode. Zur elektrischen Kontaktierung dieser beiden Elemente sind Anschlüsse in Form eines Drei-Pin-Leadframes vorgesehen. Dieser Leadframe soll aus einem schlecht wärmeleitenden Material wie Stahl bestehen, um eine Wärmeentkopplung zu erreichen. Die Anschlüsse des Leadframes sind durch eine Leiterplatine hindurchgeführt, die sich in dem Steuergeräte-Gehäusesegment befindet, und mit Leiterbahnen elektrisch leitend verbunden. Außerdem ist die Leiterplatine mit dem zweiten Temperaturfühler elektrisch leitend verbunden. Dort befindet sich auch eine Verarbeitungseinheit, die die Messsignale der beiden Temperaturfühler und des Sonnensensors empfängt und aus diesen Messsignalen ein Signal berechnet, das die Temperatur im Innenraum des Fahrzeuges möglichst genau wiedergeben soll. In der Praxis sind die Leiterbahnen auf der Leiterplatine zur thermischen Entkoppelung als Mäander ausgebildet.

Die gestiegenen Anforderungen an die Messgenauigkeit der Sensorik von Klimaanlagen in Fahrzeugen sowie der hohe Kostendruck in der Automobilindustrie erfordern jedoch weitere Verbesserungen der bekannten Vorrichtung zur Erfassung der Temperatur im Fahrgastraum eines Fahrzeuges und vergleichbaren Räumen.

Aus EP 1 457 365 A2 ist eine weitere Vorrichtung zur Ermittlung der Temperatur bekannt, die einen, Temperatursensor, einen Strahlungssensor und einen Kompensationstemperatursensor umfasst. Die drei Sensoren sind zu einer gemeinsamen Baugruppe zusammengefasst. Der Kompensationstemperatursensor ist von dem Temperatursensor thermisch entkoppelt hinter einer Wand angeordnet.

Aufgabe der Erfindung ist es, die Nachteile des Standes der Technik zu beseitigen. Es soll insbesondere eine Vorrichtung zur Erfassung der Temperatur in einem Raum, insbesondere im Innenraum eines Fahrzeuges, angegeben werden, die einen geringeren Platzbedarf aufweist, kostengünstiger herzustellen ist und möglichst eine verbesserte Komposition von Messfehlern ermöglicht.

Diese Aufgabe wird durch die Merkmale der Ansprüche 1 und 10 gelöst. Zweckmäßige Ausgestaltungen der Erfindungen ergeben sich aus den Merkmalen der Unteransprüche.

Nach Maßgabe der Erfindung ist eine Vorrichtung zur Erfassung der Temperatur in einem Raum, insbesondere dem Innenraum eines Fahrzeuges, vorgesehen, die
- einen ersten Tempertaturfühler zur Erfassung der Temperatur in einem ersten, in dem Raum liegenden Messbereich;
- einen zweiten Temperaturfühler zur Erfassung der Temperatur in einem zweiten, in der Vorrichtung liegenden Messbereich;
- einen Sonnensensor zur Erfassung der Sonneneinstrahlung, der der erste Messbereich ausgesetzt ist, und
- einen Lead-Frame umfasst, auf dem der erste Temperaturfühler, der zweite Temperaturfühler und der Sonnensensor angeordnet sind, wobei der Lead-Frame Bahnen umfasst, die zur thermischen Entkoppelung Unterbrechungen aufweisen, wobei die Unterbrechungen mittels elektrisch leitender Strukturen überbrückt sind.

Bei der erfindungsgemäßen Vorrichtung sind beide Temperaturfühler und der Sonnensensor auf ein und demselben Lead-Frame angeordnet. Damit entfällt die Notwendigkeit, Anschlusselemente aus einem schlecht leitendenden Material wie Stahl einzusetzen, die zu Leiterbahnen einer Leiterplatte geführt werden müssen, deren Leiterbahnen wiederum als Mäander ausgebildet sind. Vielmehr sind die beiden Temperaturfühler und der Sensor auf den Bahnen eines Lead-Frames angeordnet, der beispielsweise aus einem gut leitenden Material wie Kupfer bestehen kann.

Umfasst der Lead-Frame mehrere Bahnen, so liegen diese Bahnen vorzugsweise in einer gemeinsamen Ebene, um eine raumsparende Gestaltung der erfindungsgemäßen Vorrichtung sicherzustellen. Es ist insbesondere vorteilhaft, wenn die Bahnen mit ihren jeweiligen Flächenseiten in einer Ebene liegen.

Bei dem Lead-Frame kann es sich um ein metallisches Formteil handeln. Ein solches Formteil kann mittels Ätzens oder Stanzens aus einem Metallblech, beispielsweise einem Metallband, erhalten werden. Vorzugsweise ist der Lead-Frame ein Stanzgitter. Der Lead-Frame kann eine übliche Stärke haben, beispielsweise eine Stärke von 0,63 mm. Der Lead-Frame kann vollständig oder in einzelnen Bereichen vergoldet, versilbert und/oder verzinnt sein. Dies kann beispielsweise im Falle eines Stanzgitters erreicht werden, indem das Stanzgitter einem oder mehreren Galvanisierungsschritten unterzogen wird.

Auch wenn erfindungsgemäß vorgesehen ist, dass beide Temperaturfühler und der Sonnensensor auf ein und demselben Lead-Frame angeordnet sind, so ist dennoch eine Unterbrechung des Wärmeflusses, d. h. eine thermische Entkoppelung, notwendig. Die thermische Entkopplung wird dadurch realisiert, dass die Bahnen des Lead-Frames Unterbrechungen aufweisen, die mittels elektrisch leitenden Strukturen überbrückt sind. Die elektrisch leitenden Strukturen sollen den elektrischen Strom gut leiten, Wärme jedoch schlecht. Bei diesen elektrisch leitenden Strukturen kann es sich um keramische Bauelemente, Stege aus Kohlenstoff-Nanoröhren, elektrisch leitende Schichten oder Kombinationen davon handeln. Beispielhafte keramische Bauelemente sind Widerstände und Spulen. Die keramischen Bauelemente sind vorzugsweise SMD-Bauelemente. Bei den Unterbrechungen kann es sich um Löcher handeln, die in die Bahnen des Lead-Frames eingebracht sind und die Bahn vollständig unterbrechen.

Kohlenstoff-Nanoröhren, die auch als Carbon Nanotubes (CNT) bezeichnet werden, sind röhrenförmige Gebilde, deren Enden offen oder geschlossen sein können. In der vorliegenden Erfindung können die Kohlenstoff-Nanoröhren ein- oder zweiwandig sein. Bei zweiwandigen Kohlenstoff-Nanoröhren sind die einzelnen Röhren konzentrisch angeordnet.

Die Stege aus Kohlenstoff-Nanoröhren weisen vorzugsweise eine Stärke von 50 bis 500 nm, stärker bevorzugt 100 bis 300 nm und besonders bevorzugt 200 nm auf. Im Vergleich zu Stegen aus Kupfer mit einer üblichen Stärke von 35 µm, weisen CNT-Stege einen geringen Wärmstrom auf, leiten den elektrischen Strom jedoch gut.

Sind die elektrisch leitenden Strukturen elektrisch leitende Schichten, so haben diese elektrisch leitenden Schichten vorzugsweise eine Schichtdicke von 50 nm bis 5 µm.

Der erste Temperaturfühler ist vorzugsweise ein NTC-Widerstandselement. Der zweite Temperaturfühler ist vorzugsweise ein NTC-Widerstandselement. Der Sonnensensor ist vorzugsweise eine Photodiode. Der erste Temperaturfühler und der zweite Temperaturfühler sind vorzugsweise SMD-Bauelemente.

Der erste Temperaturfühler und der Sonnensensor sind vorzugsweise in einem ersten Gehäusesegment angeordnet, während der zweite Temperaturfühler in einem zweiten Gehäusesegment angeordnet ist, wobei das erste Gehäusesegment an das zweite Gehäusesegment angrenzt. Das erste Gehäusesegment besteht vorzugsweise aus einem Kunststoff, der optisch durchlässig ist. Bei dem Kunststoff kann es sich um ein Epoxidharz handeln. Die Form des ersten Gehäusesegmentes kann dem üblichen Gehäusesegment einer Photodiode entsprechen oder dem Gehäusesegment, das in DE 103 12 077 B3 beschrieben und dort mit dem Bezugszeichen 36 bezeichnet ist. In beiden Fällen ist das erste Gehäusesegment im Wesentlichen zylinderförmig, wobei die dem zweiten Gehäusesegment abgewandte Stirnseite des ersten Gehäusesegmentes nach außen gewölbt sein kann, während die dem zweiten Gehäusesegment zugewandte Stirnseite des ersten Gehäusesegmentes flach sein kann. Das erste Gehäusesegment kann sich in bekannter Weise, beispielsweise wie in DE 103 12 077 B3 beschrieben, in einer Öffnung in der Frontblende eines Klimaanlagen-Steuergerätes befinden. Die Frontblende grenzt an den Innenraum des Fahrzeuges an, so dass das erste Gehäusesegment mit der Stirnseite, die dem zweiten Gehäusesegment abgewandt ist, in den Innenraum des Fahrzeuges, der auch als Fahrgastraum bezeichnet wird, hineinragt. Das zweite Gehäusesegment befindet sich dann in dem Klimaanlagen-Steuergerät. Das erste Gehäusesegment und das zweite Gehäusesegment bilden das Gehäuse der erfindungsgemäßen Vorrichtung.

An eine Stirnseite des ersten Gehäusesegments grenzt zweckmäßigerweise eine Stirnseite des zweiten Gehäusesegments an. In dem zweiten Gehäusesegment ist der zweite Temperaturfühler angeordnet. An der Stirnseite des zweiten Gehäusesegments, vorzugsweise der Stirnseite, die der Stirnseite, an die das erste Gehäusesegment angrenzt, gegenüberliegt, treten Anschlusselemente aus dem zweiten Gehäusesegment aus. Die Anschlusselemente, die auch als Pins bezeichnet werden können, sind Bestandteile des Lead-Frames. Das zweite Gehäusesegment besteht vorzugsweise aus einem Kunststoff, beispielsweise aus einem Kunststoff auf Polyamidbasis wie Macromelt (Hersteller: Henkel KGaA, DE). Das zweite Gehäusesegment kann quaderförmig sein. Abgesehen von den Anschlusskontakten sind der Lead-Frame und die auf ihm angeordneten Bauelemente einschließlich den beiden Temperaturfühlern, dem Sonnensensor und den elektrisch leitenden Strukturen zur Überbrückung in die Gehäusesegmentmaterialien eingegossen.

Vorzugsweise ist vorgesehen, dass der erste Temperaturfühler und der Sonnensensor durch Unterbrechungen in den Bahnen des Lead-Frames thermisch von dem zweiten Temperaturfühler entkoppelt sind. Sind ein erstes Gehäusesegment und ein zweites Gehäusesegment vorgesehen, so sind auf diese Weise der erste Temperaturfühler und der Sonnensensor, die sich in dem ersten Gehäusesegment befinden, von dem zweiten Temperaturfühler, der sich in dem zweiten Gehäusesegment befindet, thermisch entkoppelt. Ferner kann vorgesehen sein, dass die Anschlusselemente, die aus dem zweiten Gehäusesegment austreten, durch Unterbrechungen in den Bahnen des Lead-Frames von den elektrischen Bauelementen, die sich in dem zweiten Gehäusesegment befinden, thermisch entkoppelt sind. Vorzugsweise sind die Unterbrechungen, die sich in den Bahnen des Lead-Frames zur thermischen Entkoppelung der elektrischen Bauelemente befinden, sowie die elektrischen Strukturen zu deren Überbrückung, in dem zweiten Gehäusesegment angeordnet.

In einer Ausführungsform der Erfindung umfasst die erfindungsgemäße Vorrichtung einen Lead-Frame, der eine erste Bahn, eine zweite Bahn und eine dritte Bahn aufweist. Am Ende der ersten Bahn ist der Sonnensensor angeordnet und am Ende der zweiten Bahn der erste Temperaturfühler. Die dritte Bahn ist an ihrem Ende mit dem Sonnensensor und dem ersten Temperaturfühler elektrisch leitend verbunden. Diese Enden der ersten, zweiten und dritten Bahn befinden sich im ersten Gehäusesegment. Die anderen Enden der ersten, zweiten und dritten Bahn bilden die Anschlusselemente, die zweckmäßigerweise an der Stirnseite des zweiten Gehäusesegmentes, die dem ersten Gehäusesegment abgewandt ist, aus dem zweiten Gehäusesegment herausragen. Das Ende der ersten Bahn in dem ersten Gehäusesegment ist vorzugsweise möglichst nahe an die Stirnseite des ersten Gehäusesegments herangeführt, die der Stirnseite des ersten Gehäusesegmentes gegenüberliegt, an die das zweite Gehäusesegment angrenzt. Die erste, zweite und dritte Bahn verlaufen zweckmäßigerweise in einer Ebene. Vorzugsweise verlaufen die erste, zweite und dritte Bahn von der Stirnseite des ersten Gehäusesegmentes, an die das zweite Gehäusesegment angrenzt, parallel in Richtung der gegenüberliegenden Stirnseite des ersten Gehäusesegments, wobei die zweite Bahn zwischen der ersten und dritten Bahn verläuft. Die zweite Bahn kann innerhalb des ersten Gehäusesegments kürzer als die erste und dritte Bahn sein, die innerhalb des ersten Gehäusesegments abgewinkelt sind und nach der Abwinkelung unter Ausbildung eines Spaltes aufeinander zulaufen. Die Abwinkelungen der ersten und dritten Bahn können in etwa in Höhe des Endes der zweiten Bahn ausgebildet sein. Der Spalt zwischen dem Ende der ersten und dritten Leiterbahn kann mit einem Bonddraht elektrisch verbunden sein. Der erste Temperaturfühler ist elektrisch leitend mit dem Ende der zweiten Bahn und dem Ende der dritten Bahn verbunden. Diese Ausformung der ersten, zweiten und dritten Leiterbahn ermöglicht eine kompakte Gestaltung des ersten Gehäusesegments.

Die erste, zweite und dritte Bahn von dem zweiten Gehäusesegment erstrecken sich von dem ersten Gehäusesegment in das zweite Gehäusesegment und verlaufen dort, bis sie als Anschlusskontakte aus dem zweiten Gehäusesegment austreten. In dem zweiten Gehäusesegment kann ferner eine vierte Bahn angeordnet sein, die sich nicht in das erste Gehäusesegment erstreckt. Auch diese vierte Bahn tritt als Anschlusskontakt aus dem zweiten Gehäusesegment aus, zweckmäßigerweise an derselben Stirnseite wie die anderen Bahnen. Die vierte Bahn ist elektrisch leitend mit dem zweiten Temperaturfühler verbunden. Der zweite Temperaturfühler ist mit der dritten Bahn ebenfalls elektrisch leitend verbunden. Vorzugsweise ist die vierte Bahn in dem zweiten Gehäusesegment zwischen der zweiten und dritten Bahn angeordnet. Mit der dritten Bahn sind damit sowohl der Sonnensensor und der erste Temperaturfühler in dem ersten Gehäusesegment und der zweite Temperaturfühler in dem zweiten Gehäusesegment verbunden.

Die Anschlusselemente können die erfindungsgemäße Vorrichtung über Leiterbahnen mit einer Verarbeitungseinheit verbinden. Die Verarbeitung der Messsignale, die von dem ersten Temperaturfühler, dem zweiten Temperaturfühler und dem Sonnensensor an die Verarbeitungseinheit übermittelt werden, kann in bekannter Weise, beispielweise wie in DE 103 12 077 B3, erfolgen.

Mittels des ersten Temperaturfühlers wird in dem ersten Messbereich, der unmittelbar an den Abschnitt des ersten Gehäuses angrenzt, das sich in dem Innenraum befindet, die dortige Temperatur erfasst und ein Messsignal erzeugt, das diese Temperatur wiederspiegelt. Mittels des Sonnensensors wird die Intensität der Sonnenstrahlung und damit indirekt die Wärmestrahlung erfasst, die in den ersten Messbereich einfällt und für eine Erwärmung des ersten Gehäuses und von Bestandteilen in seiner Umgebungen, wie der Frontblende, sorgt. Der Sonnensensor erzeugt ein Messsignal, das die Intensität der Sonneneinstrahlung wiederspiegelt und so eine Kompensation des Messsignals des ersten Temperaturfühlers ermöglicht, das aufgrund der Einstrahlung der Sonne verfälscht sein könnte. Der zweite Temperaturfühler ist nicht in dem ersten Gehäusesegment angeordnet, in dem sich der erste Temperaturfühler und der Sonnensensor befinden. Der zweite Messbereich, dessen Temperatur von dem zweiten Temperaturfühler erfasst wird, ist von dem ersten Messbereich getrennt und liegt in dem zweiten Gehäusesegment. Der zweite Temperaturfühler liefert ein Messsignal, das die Temperatur im zweiten Messbereich wiederspiegelt und eine Kompensation des Messsignals des ersten Temperaturfühlers, das durch die Eigenerwärmung der Vorrichtung verfälscht sein könnte, ermöglicht.

Auf dem erfindungsgemäßen Lead-Frame können weitere elektrische Bauelemente angeordnet sein, die in das erste oder zweite Gehäusesegment eingegossen sind, beispielsweise Kondensatoren zur Verschiebung einer Kennlinie.

Der Lead-Frame ist vorzugsweise ein Stanzgitter. Die Bahnen des Stanzgitters werden auch als Stanzgitterbahnen bezeichnet. Ein Stanzgitter ist nicht als Gitter im engsten Wortsinn zu verstehen, sondern bezeichnet auch einfachere Geometrien, beispielsweise streifenförmige Leiterbahnen, die in einer Ebene verlaufen.

Nach Maßgabe der Erfindung ist ferner ein Verfahren zur Herstellung der erfindungsgemäßen Vorrichtung vorgesehen, das die Schritte umfasst:
(a) Austrennen von Stanzgittern aus einem Materialband eines elektrisch leitenden Materials;
(b) Aufbringen der Stanzgitter auf ein nicht-leitendes Trägermaterial;
(c) Einbringen von Unterbrechungen in die Stanzgitterbahnen; und
(d) Aufbringen des ersten Temperaturfühlers, des zweiten Temperaturfühlers, des Sonnensensors und der elektrisch leitenden Strukturen zur Überbrückung der Unterbrechungen auf das Stanzgitter.

In Schritt (a) bleiben die Stanzgitterbahnen, zweckmäßigerweise an ihren beiden Enden, mittels Querstegen und Verbindungstegen miteinander verbunden. Die Querstege und Verbindungstege werden erst am Ende des Herstellungsverfahrens entfernt, um den Zusammenhalt des Stanzgitters während des gesamten Herstellungsverfahrens zu gewährleisten.

Im Anschluss an Schritt (a) und vor Schritt (b) können die Stanzgitterbahnen in vorgegebenen Bereichen verzinkt, vergoldet und/oder versilbert werden, zweckmäßigerweise durch einen oder mehrere Galvanisierungsschritte.

In Schritt (b) wird das Stanzgitter, beispielsweise mittels Spritzgießens, auf ein nicht-leitendes Trägermaterial aufgebracht, um den Zusammenhalt der Stanzgitterbahnen auch nach dem Einbringen der Unterbrechungen zu gewährleisten. Bei dem Trägermaterial kann es sich um einen Kunststoff handeln. Dabei sollte das Trägermaterial, beispielsweise ein Kunststoff, nur eine Flächenseite der Stanzgitterbahnen bedecken. Das Trägermaterial kann aus einem üblichen Kunststoff, beispielsweise aus einem Kunststoff auf Polyamid-Basis wie Macromelt bestehen.

Soll der Lead-Frame der erfindungsgemäßen Vorrichtung kein Stanzgitter sein, so kann anstelle der Schritte (a) bis (c) vorgesehen sein, dass eine Metallfolie auf ein nicht-leitendes Trägermaterial aufgebracht wird und dass die Bahnen und Unterbrechungen durch Ätzen ausgebildet werden.

In Schritt (c) können die Unterbrechungen beispielsweise durch Stanzen erhalten werden, wobei die Stanzgitterbahnen vollständig durchtrennt werden. Es kann vorgesehen sein, dass sich die Unterbrechungen auch über die gesamte Stärke des nicht-leitenden Trägermaterials erstrecken, dies ist aber nicht erforderlich. Insbesondere wenn Stege aus Kohlenstoff-Nanoröhren oder elektrisch leitende Schichten aufgebracht werden, kann es zweckmäßig sein, wenn sich die Unterbrechungen nicht oder nicht vollständig durch das Trägermaterial erstrecken.

Schritt (d) kann beispielsweise mittels Oberflächenmontage (englisch: surfacemounting technology, SMT) ausgeführt werden, wenn die Bauelemente, also der erste Temperaturfühler und der zweite Temperaturfühler, SMD-Bauelemente sind. Sind auch die elektrisch leitenden Strukturen zur Überbrückung der Unterbrechungen SMD-Bauelemente, so können diese auch mittels SMT aufgebracht werden. Beispielsweise kann das Stanzgitter, das auf dem Trägermaterial aufliegt und die Unterbrechungen aufweist, in einen Lötrahmen eingelegt und in den Bereichen, in denen die SMD-Bauelemente aufgebracht werden sollen, mit Lötpaste bedruckt werden. Anschließend werden die SMD-Bauelemente aufgebracht und in einer Lötstrecke durch Reflow-Löten mit den Stanzgitterbahnen dauerhaft verbunden. Anschließend wird das Stanzgitter aus dem Lötrahmen entnommen.

Sind die elektrisch leitenden Strukturen zur Überbrückung der Unterbrechungen keine SMD-Bauelemente, sondern Stege aus Kohlenstoff-Nanoröhren oder elektrisch leitende Schichten, so können diese im Anschluss an Schritt (d) aufgebracht werden. Ebenfalls im Anschluss an Schritt (d) oder - falls Stege aus Kohlenstoff-Nanoröhren oder elektrisch leitende Schichten aufgebracht werden, im Anschluss daran - wird der Sonnensensor auf ein Ende einer Stanzgitterbahn aufgeklebt und der Bonddraht angebracht, der den Sonnensensor mit einem Ende einer anderen Stanzgitterbahn verbindet. Die Stege aus Kohlenstoff-Nanoröhren können beispielsweise aufgedruckt werden. Die elektrisch leitenden Schichten können beispielsweise mittels bekannter Beschichtungsverfahren wie Sputterdeposition aufgebracht werden.

Das Verfahren kann ferner in einem Schritt (e) das Ausbilden des ersten Gehäusesegments, das den Abschnitt des Stanzgitters umgibt, auf dem sich der erste Temperaturfühler und der Sonnensensor befinden, mit einem ersten, optisch durchlässigen Kunststoffmaterial umfassen. Zuvor werden der Quersteg, der sich an diesem Teil des Stanzgitters befindet, und die Verbindungstege entfernt. Vorzugsweise wird dieser Teil des Stanzgitters, der in das erste Kunststoffmaterial eingebettet werden soll, durch einen Tauchvorgang, wie er bei der Herstellung herkömmlicher LED-Gehäuse mit 3 oder 5 mm Durchmesser üblich ist, in das erste Gehäusesegment eingebettet. Das erste Gehäusesegment kann alternativ auch durch Spritzgießen, beispielsweise unter geringem Druck oder drucklos, ausgebildet werden.

Nach dem Aushärten des Kunststoffmaterials, das das erste Gehäusesegment bildet, kann das Verfahren außerdem als Schritt (f) das Ausbilden des zweiten Gehäusesegments, das den Abschnitt des Stanzgitters umgibt, auf dem sich der zweite Temperaturfühler befindet, mit einem zweiten Kunststoffmaterial, umfassen. Dazu kann der verbliebene Querstreifen des Stanzgitters entfernt werden. Das Spritzgießen des zweiten Gehäusesegmentes erfolgt vorzugsweise unter geringem Druck oder drucklos, um eine Beschädigung der Bauelemente zu vermeiden. Dabei wird dieser Teil des Stanzgitters vollständig in das zweite Kunststoffmaterial eingebettet.

Die Erfindung wird nachstehend anhand von Ausführungsbeispielen, die die Erfindung nicht einschränken sollen, unter Bezugnahme auf die Zeichnungen näher erläutert. Dabei zeigen
- Fig. 1: eine Ansicht einer Ausführungsform einer erfindungsgemäßen Vorrichtung, wobei auf die Darstellung der Gehäusesegmente und der elektrisch leitenden Strukturen zur Überbrückung von Unterbrechung zur Vereinfachung der Darstellung verzichtet worden ist;
- Fig. 2: eine Ansicht der in Fig. 1 gezeigten Ausführungsform der erfindungsgemäßen Vorrichtung mit Darstellung der keramischen Bauelemente zur Überbrückung, wobei auf die Darstellung der Gehäusesegmente zur Vereinfachung der Darstellung verzichtet worden ist;
- Fig. 3: eine Ansicht der in Fig. 1 gezeigten Ausführungsform der erfindungsgemäßen Vorrichtung mit Darstellung der beiden Gehäusesegmente;
- Fig. 4: eine Ansicht einer zweiten Ausführungsform der erfindungsgemäßen Vorrichtung, wobei zur Vereinfachung der Erkennbarkeit auf die Darstellung des zweiten Gehäusesegmentes ganz und auf die Darstellung des ersten Gehäusesegmentes teilweise verzichtet wurde; und
- Fig. 5: eine Ansicht der in Fig. 4 gezeigten Ausführungsform der erfmdungsgemäßen Vorrichtung mit Darstellung beider Gehäusesegmente.

Die verwendeten Bezugszeichen haben, sofern nicht anders angegeben, in allen Zeichnungen dieselbe Bedeutung.

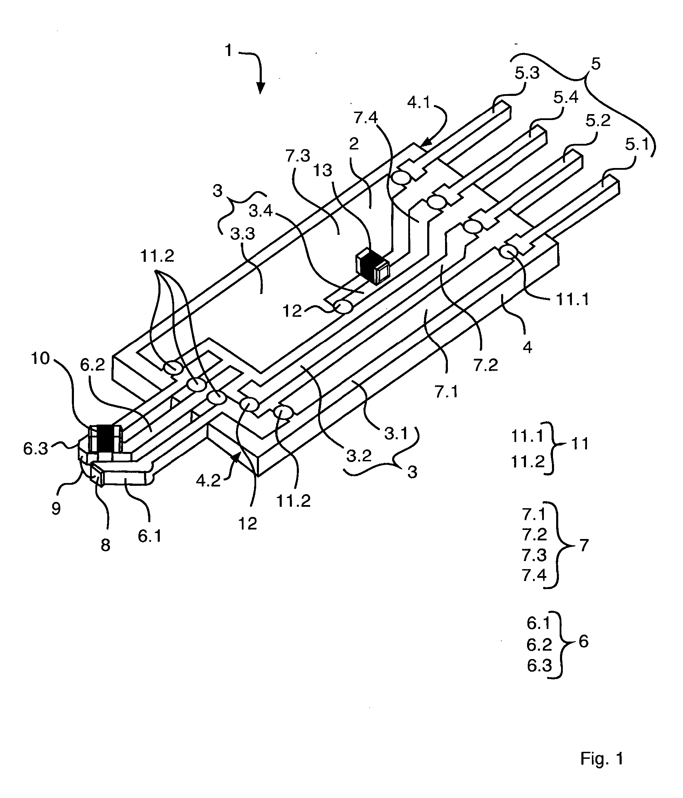

Die in Fig. 1 gezeigte erste Ausführungsform der erfindungsgemäßen Vorrichtung weist ein Stanzgitter 2 mit Stanzgitterbahnen 3 aus Kupfer auf, die eine Stärke von 0,63 mm aufweisen. Die Stanzgitterbahnen 3 liegen in einem mittleren Teil auf einem nicht-leitenden Trägermaterial 4 aus Kunststoff auf, das im Wesentlichen quaderförmig ausgebildet ist. An der ersten Stirnseite 4.1 des Trägermaterials 4 ragen die Stanzgitterbahnen 3 über das Trägermaterial 4 unter Ausbildung der Anschlusselemente 5.1 bis 5.4 hinaus. An der gegenüberliegenden, zweiten Stirnseite 4.2 des Trägermaterials 4 ragen die erste Stanzgitterbahn 3.1, die zweite Stanzgitterbahn 3.2 und die dritte Stanzgitterbahn 3.3 unter Ausbildung der Abschnitte 6.1, 6.2 und 6.3 hinaus. Die vierte Stanzgitterbahn 3.4 endet auf dem nicht-leitenden Trägermaterial 4. Die Abschnitte 6.1, 6.2 und 6.3 werden gemeinsam als Abschnitte 6 bezeichnet.

An der zweiten Stirnseite 4.2 des Trägermaterials 4 verlaufen die Abschnitte 6.1, 6.2 und 6.3 in einem Bereich, der an die Stirnseite 4.2 angrenzt, parallel zueinander. Dabei ist die zweite Stanzgitterbahn 3.2 zwischen der ersten Stanzgitterbahn 3.1 und der dritten Stanzgitterbahn 3.3 angeordnet. Die erste und dritte Stanzgitterbahn 3.1, 3.3 erstrecken sich über das Ende der zweiten Stanzgitterbahn 3.2 hinaus. In etwa in Höhe des Endes der zweiten Stanzgitterbahn 3.2 sind die erste und dritte Stanzgitterbahn 3.1, 3.3 abgewickelt und verlaufen dann unter Ausbildung eines Spaltes aufeinander zu. Auf die Stirnseite des Endes der ersten Stanzgitterbahn 3.1 ist eine Photodiode als Sonnensensor 8 aufgeklebt, von der sich ein Bonddraht 9 zum Ende der dritten Stanzgitterbahn 3.3 erstreckt. Auf das Ende der zweiten Stanzgitterbahn 3.2 und das Ende der dritten Stanzgitterbahn 3.3 ist ferner ein NTC als erster Temperaturfühler 10 aufgebracht, der elektrisch leitend mit diesen beiden Enden verbunden ist.

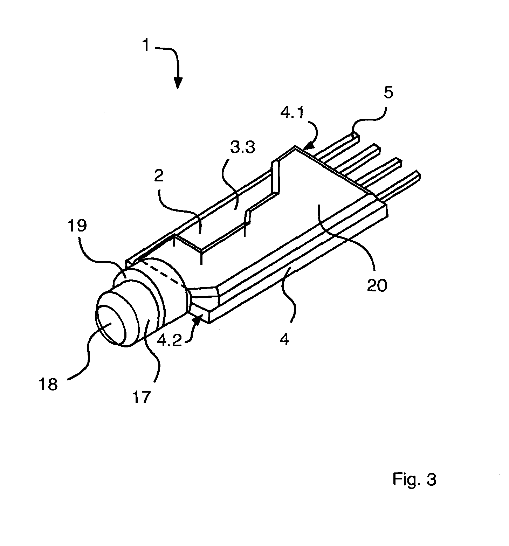

In Fig. 3 ist zu erkennen, dass die Abschnitte 6.1, 6.2 und 6.3 der ersten, zweiten und dritten Stanzgitterbahn 3.1, 3.2 und 3.3 sowie der erste Temperaturfühler 10, der Bonddraht 9 sowie der Sonnensensor 8 vollständig in das erste, optisch durchlässige Kunststoffmaterial eingebettet sind, das das erste Gehäusesegment 17 bildet. Dabei sollte sich die Stirnseite 18 des ersten Gehäusesegmentes 17, die nicht an der zweiten Stirnseite 4.2 des Trägermaterials 4 angrenzt, möglichst dicht an dem Sonnensensor 8 befinden.

In die Stanzgitterbahnen 3 sind zur thermischen Entkopplung Unterbrechungen 11 eingebracht. Jede Stanzgitterbahn 3 weist zumindest zwei Unterbrechungen 11, 12 auf. Dabei befinden sich erste Unterbrechungen 11.1 in einem Bereich, der an die erste Stirnseite 4.1 des Trägermaterials 4 angrenzt. Zweite Unterbrechungen 11.2 befinden sich - abgesehen von der vierten Stanzgitterbahn 3.4, die auf dem Trägermaterial 4 endet - in einem Bereich, der an die zweite Stirnseite 4.2 des Trägermaterials 4 angrenzt.

Der Bereich einer Stanzgitterbahn 3 zwischen zwei Unterbrechungen wird im Folgenden gemeinsam auch als Abschnitte 7 bezeichnet. Damit besteht die erste Stanzgitterbahn 3.1 aus dem Anschlusselement 5.1, dem Abschnitt 7.1 und dem Abschnitt 6.1; die zweite Stanzgitterbahn 3.2 aus dem Anschlusselement 5.2, dem Abschnitt 7.2 und dem Abschnitt 6.2; die dritte Stanzgitterbahn 3.3 aus dem Anschlusselement 5.3, dem Abschnitt 7.3 und dem Abschnitt 6.3; und die vierte Stanzgitterbahn 3.4 aus dem Anschlusselement 5.4 und dem Abschnitt 7.4

Die ersten Unterbrechungen 11.1 sorgen für eine thermische Entkopplung der Anschlusselemente 5 der Stanzgitterbahnen 3 von deren Abschnitten 7.1, 7.2, 7.3, die sich auf dem Trägermaterial 4 und, im Falle der ersten, zweiten und dritten Stanzgitterbahn 3.1, 3.2, 3.3, über die zweite Stirnseite 4.2 hinaus als Abschnitt 6.1, 6.2 und 6.3 erstrecken. Die zweiten Unterbrechungen 11.2 sorgen für eine thermische Entkopplung der Abschnitte 6.1, 6.2, 6.3 der ersten, zweiten und dritten Stanzgitterbahn 3.1, 3.2, 3.3, die sich über die zweite Stirnseite 4.2 hinaus erstrecken, von den Abschnitten die auf dem Trägermaterial 4 verlaufen. Die zweiten Unterbrechungen 11.2 sowie weitere Unterbrechungen 12 können für eine elektrische Trennung der Stanzgitterbahnen 3 voneinander sorgen. Die genaue Anordnung der Unterbrechungen 11 und 12 ergibt sich aus der Einrichtung der Anlagen zur Herstellung der erfindungsgemäßen Vorrichtung 1 und kann von einem Fachmann ohne weiteres bestimmt werden.

Die vierte Stanzgitterbahn 3.4 sorgt für eine elektrische Kontaktierung eines zweiten NTC als zweiten Temperaturfühler 13. Der zweite Temperaturfühler 13 ist elektrisch mit der vierten Stanzgitterbahn und der dritten Stanzgitterbahn verbunden.

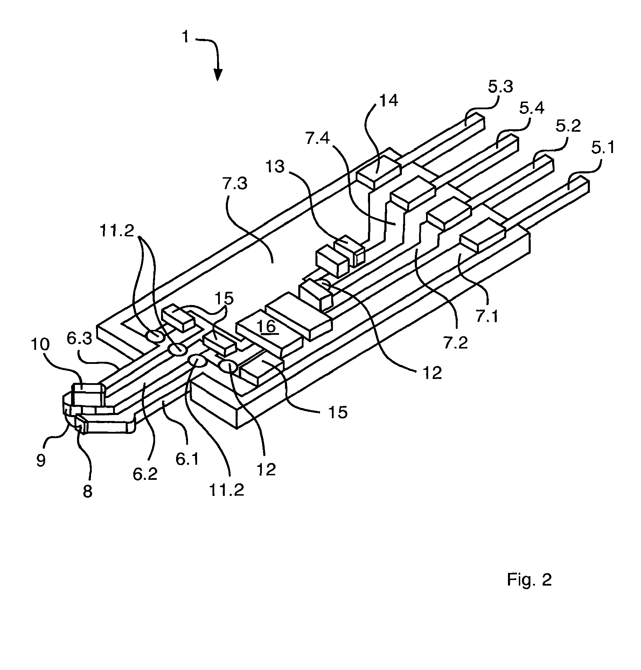

Wie in Fig. 2 zu erkennen ist, sind die Unterbrechungen 11.1 durch erste keramische Bauelemente 14, beispielsweise Widerstände oder Spulen, überbrückt. An Stelle der keramischen Bauelemente 14 können auch Stege aus Kohlenstoff-Nanoröhren vorgesehen sein. Die ersten Bauelemente 14 sorgen für eine elektrische Verbindung der Abschnitte 7 mit den Anschlusselementen 5 der jeweiligen Stanzgitterbahn 3.

Wie in Fig. 2 ferner zu erkennen ist, sind die Unterbrechungen 11.2 durch zweite keramische Bauelemente 15, beispielsweise Widerstände oder Spulen, überbrückt. An Stelle der zweiten keramischen Bauelemente 15 können auch Stege aus Kohlenstoff-Nanoröhren vorgesehen sein. Die zweiten Bauelemente 15 sorgen für eine elektrische Verbindung der Abschnitte 7 mit den Abschnitten 6 der jeweiligen Stanzgitterbahn 3.

In Fig. 2 sind ferner weitere elektrische Bauelemente gezeigt, die auf das Stanzgitter im Bereich der Abschnitte 7 der Stanzgitterbahnen 3 aufgebracht sind. Dabei kann es sich beispielsweise um einen Kondensator 16 zur Verschiebung einer Kennlinie der erfindungsgemäßen Vorrichtung handeln.

Figur 3 zeigt die in den Figuren 1 und 2 dargestellte Ausführungsform der erfindungsgemäßen Vorrichtung 1 mit dem ersten Gehäusesegment 17 und dem zweiten Gehäusesegment 20. Das zweite Gehäusesegment 20 ist nur zum Teil dargestellt, um den Blick auf das Stanzgitter 2 zuzulassen. Tatsächlich bedeckt das zweite Gehäusesegment 20 das Stanzgitter 2, soweit es auf dem Trägermaterial 4 aufliegt, vollständig. Es ist in Fig. 3 zu erkennen, dass das erste Gehäusesegment 17 zwei zylinderförmige Abschnitte aufweist. Der erste Abschnitt grenzt an die Stirnseite 18 an, die von der Stirnseite 4.2 des Trägermaterials 4 beabstandet ist. Der zweite Abschnitt weist einen größeren Durchmesser als der erste Abschnitt auf, wodurch eine Stufe 19 entsteht. Der zweite Abschnitt grenzt an die Stirnseite 4.2 des Trägermaterials 4 an und erstreckt sich bis zum ersten Abschnitt. Zweckmäßigerweise ist der Durchmesser der Öffnung in der Frontblende (nicht gezeigt) eines Klimaanlagen-Steuergerätes so gewählt, dass das erste Gehäusesegment 17 bis zur Stufe 19, die dann einen Anschlag bildet, hindurchgeführt werden kann. Damit ragt das Gehäusesegment 17 mit seinem ersten Abschnitt und der Stirnseite 18 in den Innenraum eines Fahrzeuges hinein, während sich der zweite Abschnitt des ersten Gehäusesegmentes 17, das zweite Gehäusesegment 20 und die Anschlusselemente 5 hinter der Frontblende und damit außerhalb des Innenraums des Fahrzeuges befinden.

Das zweite Gehäusesegment 20 grenzt an das erste Gehäusesegment 17 an. In das zweite Gehäusesegment sind alle Abschnitte des Stanzgitters und der darauf befindlichen Bauelemente eingebettet, die sich zwischen der ersten und der zweiten Stirnseite 4.1, 4.2 auf dem Trägermaterial 4 befinden. Das zweite Gehäusesegment 20 ist annähernd quaderförmig, wobei es an seinen Ecken abgeschrägt sein kann.

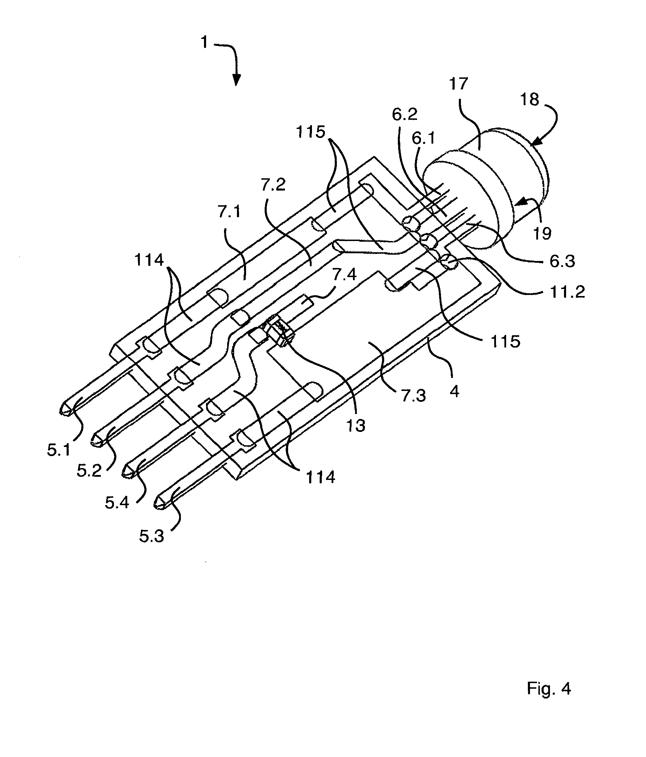

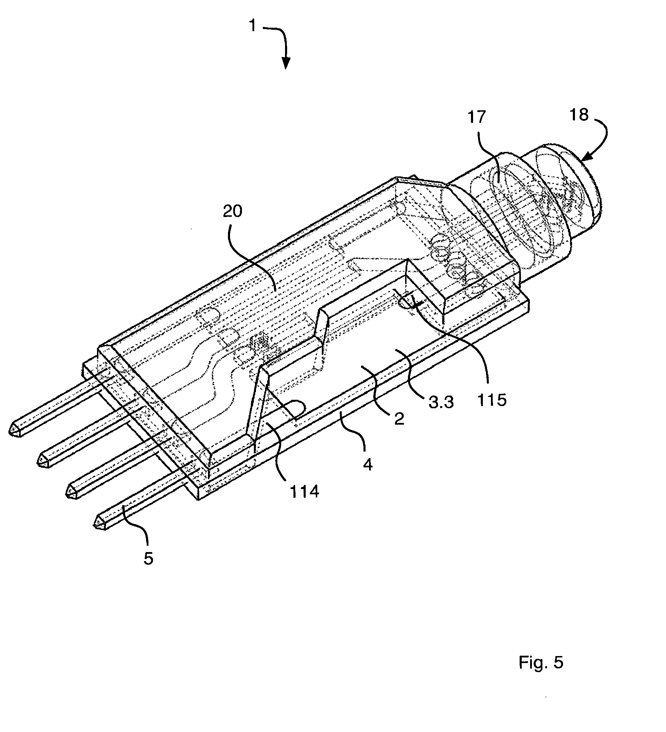

Die in den Figuren 4 und 5 gezeigte zweite Ausführungsform der erfindungsgemäßen Vorrichtung 1 weist anstelle von keramischen Bauelementen 14, 15 zur Überbrückung der Unterbrechungen 11.1, 11.2 Stege aus Kohlenstoff-Nanoröhren 114, 115 auf. Es ist in Fig. 4 zu erkennen, das die Unterbrechungen 11.1 und einige der Unterbrechungen 11.2 nicht ringförmig ausgebildet sind, sondern dass größere Segmente aus den Stanzgitterbahnen 3 herausgestanzt worden sind. Die größeren Unterbrechungen lassen sich ohne Weiteres mittels Stegen aus Kohlenstoff-Nanoröhren 114, 115 überbrücken. Wie in Fig. 4 gezeigt ist, können auch zusätzlich kreisförmige Unterbrechungen 11.2 vorgesehen sein. Die Stege aus Kohlenstoff-Nanoröhren 114, 115 haben vorzugsweise eine Stärke von 200 nm. Im Übrigen entspricht die zweite Ausführungsform der ersten Ausführungsform.

Es ist anzumerken, dass auch in Fig. 5 das zweite Gehäusesegment 20 nur zum Teil dargestellt ist, um den Blick auf das Stanzgitter 2 zuzulassen. Tatsächlich bedeckt das zweite Gehäusesegment 20 das Stanzgitter 2, soweit es auf dem Trägermaterial 4 aufliegt, vollständig.

### Bezugszeichenliste

- 1: Vorrichtung zur Erfassung der Temperatur
- 2: Stanzgitter
- 3: Stanzgitterbahnen
- 3.1: erste Stanzgitterbahn
- 3.2: zweite Stanzgitterbahn
- 3.3: dritte Stanzgitterbahn
- 3.4: vierte Stanzgitterbahn
- 4: Trägermaterial
- 4.1: erste Stirnseite des Trägermaterials
- 4.2: zweite Stirnseite des Trägermaterials
- 5: Anschlusselement
- 5.1: Anschlusselement der ersten Stanzgitterbahn
- 5.2: Anschlusselement der zweiten Stanzgitterbahn
- 5.3: Anschlusselement der dritten Stanzgitterbahn
- 5.4: Anschlusselement der vierten Stanzgitterbahn
- 6: über die zweite Stirnseite 4.2 herausragender Abschnitt einer Stanzgitterbahn 3
- 6.1: über die zweite Stirnseite 4.2 herausragender Abschnitt der Stanzgitterbahn 3.1
- 6.2: über die zweite Stirnseite 4.2 herausragender Abschnitt der Stanzgitterbahn 3.2
- 6.3: über die zweite Stirnseite 4.2 herausragender Abschnitt der Stanzgitterbahn 3.3
- 7: Abschnitt einer Stanzgitterbahn auf dem Trägermaterial zwischen zwei Unterbrechungen
- 7.1: Abschnitt der ersten Stanzgitterbahn 3.1
- 7.2: Abschnitt der ersten Stanzgitterbahn 3.2
- 7.3: Abschnitt der ersten Stanzgitterbahn 3.3
- 7.4: Abschnitt der ersten Stanzgitterbahn 3.4
- 8: Sonnensensor
- 9: Bonddraht
- 10: erster Temperaturfühler
- 11: Unterbrechung
- 11.1: erste Unterbrechung zur thermischen Entkopplung
- 11.2: zweite Unterbrechung
- 12: Unterbrechung zur elektrischen Trennung
- 13: zweiter Temperaturfühler
- 14: erstes keramisches Bauelement
- 15: zweites keramisches Bauelement
- 16: Kondensator
- 17: erstes Gehäusesegment
- 18: Stirnseite des ersten Gehäusesegmentes
- 19: Stufe im ersten Gehäusesegment
- 20: zweites Gehäusesegment

## Patentansprüche

1. Vorrichtung zur Erfassung der Temperatur in einem Raum, insbesondere dem Innenraum eines Fahrzeuges, umfassend
- einen ersten Tempertaturfühler (10) zur Erfassung der Temperatur in einem ersten, in dem Raum liegenden Messbereich;
- einen zweiten Temperaturfühler (13) zur Erfassung der Temperatur in einem zweiten, in der Vorrichtung (1) liegenden Messbereich; und
- einen Sonnensensor (8) zur Erfassung der Sonneneinstrahlung, der der erste Messbereich ausgesetzt ist,
**dadurch gekennzeichnet, dass** sie ferner einen Lead-Frame (2) umfasst, auf dem der erste Temperaturfühler (10), der zweite Temperaturfühler (13) und der Sonnensensor (8) angeordnet sind, und dass der Lead-Frame (2) Bahnen (3) umfasst, die zur thermischen Entkoppelung Unterbrechungen (11) aufweisen, wobei die Unterbrechungen (11) mittels elektrisch leitender Strukturen (14, 15) überbrückt sind.

2. Vorrichtung nach Anspruch 1, **dadurch gekennzeichnet, dass** die elektrisch leitenden Strukturen (14, 15) aus der Gruppe ausgewählt sind, die keramische Bauelemente, Stege aus Kohlenstoff-Nanoröhren, elektrisch leitende Schichten oder Kombinationen davon umfasst.

3. Vorrichtung nach einem der vorstehenden Ansprüche, **dadurch gekennzeichnet, dass** der erste Temperaturfühler (10) und der Sonnensensor (8) in einem ersten Gehäusesegment (17) und der zweite Temperaturfühler (13) in einem zweiten Gehäusesegment (20) angeordnet sind, wobei das erste Gehäusesegment (17) an das zweite Gehäusesegment (20) angrenzt.

4. Vorrichtung nach einem der vorstehenden Ansprüche, **dadurch gekennzeichnet, dass** der erste Temperaturfühler (10) und der Sonnensensor (8) durch Unterbrechungen (11.2) in den Bahnen (3) thermisch von dem zweiten Temperaturfühler (13) entkoppelt sind.

5. Vorrichtung nach einem der vorstehenden Ansprüche, **dadurch gekennzeichnet, dass** der Lead-Frame (2) eine erste Bahn (3.1), eine zweite Bahn (3.2) und eine dritte Bahn (3.3) aufweist, wobei sich am Ende der ersten Bahn (3.1) der Sonnensensor (8) befindet, sich am Ende der zweiten Bahn (3.2) der erste Temperaturfühler (10) befindet und die dritte Bahn (3.3) mit dem Sonnensensor (8) und dem ersten Temperaturfühler (10) elektrisch leitend verbunden ist.

6. Vorrichtung nach einem der Ansprüche 3 bis 5, **dadurch gekennzeichnet, dass** sich die erste, zweite und dritte Bahn (3.1, 3.2, 3.3) von dem zweiten Gehäusesegment (20) in das erste Gehäusesegment (17) erstrecken.

7. Vorrichtung nach einem der Ansprüche 3 bis 6, **dadurch gekennzeichnet, dass** der Lead-Frame (2) eine vierte Bahn (3.4) aufweist, die sich nicht von dem zweiten Gehäusesegment (20) in das erste Gehäusesegment (17) erstreckt.

8. Vorrichtung nach einem der Ansprüche 2 bis 7, **dadurch gekennzeichnet, dass** die Stege aus Kohlenstoff-Nanoröhren eine Stärke von 50 bis 500 nm aufweisen.

9. Vorrichtung nach einem der vorstehenden Ansprüche, **dadurch gekennzeichnet, dass** der Lead-Frame (2) ein Stanzgitter ist.

10. Verfahren zur Herstellung einer Vorrichtung gemäß Anspruch 9, umfassend die Schritte
(a) Austrennen von Stanzgittern (2) aus einem Materialband eines elektrisch leitenden Materials;
(b) Aufbringen der Stanzgitter (2) auf ein nicht-leitendes Trägermaterial (4);
(c) Einbringen von Unterbrechungen (11, 12) in die Stanzgitterbahnen (3); und
(d) Aufbringen des ersten Temperaturfühlers (10), des zweiten Temperaturfühlers (13), des Sonnensensors (8) und der elektrisch leitenden Strukturen (14, 15) auf das Stanzgitter (2).

11. Verfahren nach Anspruch 10, **dadurch gekennzeichnet, dass** es ferner den Schritt umfasst:
(e) Ausbilden des ersten Gehäusesegments (17), das den Abschnitt (6) der Bahnen (3) des Stanzgitters (2) umgibt, auf dem sich der erste Temperaturfühler (10) und der Sonnensensor (8) befinden, mit einem ersten, optisch durchlässigen Kunststoffmaterial.

12. Verfahren nach Anspruch 10 oder Anspruch 11, **dadurch gekennzeichnet, dass** es ferner den Schritt umfasst:
(f) Ausbilden des zweiten Gehäusesegments (20), das den Abschnitt (7) der Bahnen des Stanzgitters umgibt, auf dem sich der zweite Temperaturfühler befindet, mit einem zweiten Kunststoffmaterial.

## Claims

1. A device for detecting the temperature in a room, in particular the interior of a vehicle, comprising
- a first temperature sensor (10) for detecting the temperature in a first measuring region located in said room;
- a second temperature sensor (13) for detecting the temperature in a second measuring region located in the device (1); and
- a sun sensor (8) for detecting the insolation the first measuring region is exposed to,
**characterized in that** it further comprises a lead frame (2) on which the first temperature sensor (10), the second temperature sensor (13), and the sun sensor (8) are disposed, and that the lead frame (2) comprises tracks (3) having interruptions (11) for thermal decoupling, wherein the interruptions (11) are bridged by means of electrically conducting structures (14, 15).

2. The device according to claim 1, **characterized in that** the electrically conducting structures (14, 15) are selected from the group comprising ceramic members, ribs made of carbon nano-tubes, electrically conducting layers or combinations thereof.

3. The device according to any one of the preceding claims, **characterized in that** the first temperature sensor (10) and the sun sensor (8) are disposed in a first case segment (17) and the second temperature sensor (13) is disposed in a second case segment (20), wherein the first case segment (17) adjoins the second case segment (20).

4. The device according to any one of the preceding claims, **characterized in that** the first temperature sensor (10) and the sun sensor (8) are thermally decoupled from the second temperature sensor (13) by interruptions (11.2) in the tracks (3).

5. The device according to any one of the preceding claims, **characterized in that** the lead frame (2) has a first track (3.1), a second track (3.2), and a third track (3.3), wherein the sun sensor (8) is located at the end of the first track (3.1), the first temperature sensor (10) is located at the end of the second track (3.2), and the third track (3.3) is connected to the sun sensor (8) and the first temperature sensor (10) in an electrically conducting manner.

6. The device according to any one of claims 3 to 5, **characterized in that** the first, second, and third tracks (3.1, 3.2, 3.3) extend from the second case segment (20) into the first case segment (17).

7. The device according to any one of claims 3 to 6, **characterized in that** the lead frame (2) has a fourth track (3.4) not extending from the second case segment (20) into the first case segment (17).

8. The device according to any one of claims 2 to 7, **characterized in that** the ribs made of carbon nano-tubes have a thickness of 50 to 500 nm.

9. The device according to any one of the preceding claims, **characterized in that** the lead frame (2) is a blanking skeleton.

10. A method for producing a device according to claim 9, comprising the steps
(a) removing blanking skeletons (2) from a material tape of an electrically conducting material;
(b) applying the blanking skeletons (2) to a non-conducting substrate (4);
(c) making interruptions (11, 12) in the tracks (3) of blanking skeletons; and
(d) applying the first temperature sensor (10), the second temperature sensor (13), the sun sensor (8), and the electrically conducting structures (14, 15) onto the blanking skeleton (2).

11. The method according to claim 10, **characterized in that** it further comprises the step:
(e) forming the first case segment (17) surrounding the portion (6) of the tracks (3) of the blanking skeleton (2), on which the first temperature sensor (10) and the sun sensor (8) are located, from a first optically transparent plastic material.

12. The method according to claim 10 or claim 11, **characterized in that** it further comprises the step:
(f) forming the second case segment (20) surrounding the portion (7) of the tracks of the blanking skeleton, on which the second temperature sensor is located, from a second plastic material.

## Revendications

1. Dispositif de saisie de la température dans une pièce, en particulier dans l'habitacle d'un véhicule, comprenant
- un premier capteur de température (10) pour la saisie de la température dans une première plage de mesure se trouvant dans la pièce ;
- un deuxième capteur de température (13) pour la saisie de la température dans une deuxième plage de mesure se trouvant dans le dispositif (1) ; et
- un capteur solaire (8) pour la saisie du rayonnement solaire qui est soumis à la première plage de mesure,
**caractérisé en ce qu'**il comprend de plus un cadre conducteur (2) sur lequel le premier capteur de température (10), le deuxième capteur de température (13) et le capteur solaire (8) sont disposés et que le cadre conducteur (2) comprend des bandes (3) présentant des interruptions (11) pour le découplage thermique, les interruptions (11) étant pontées à l'aide de structures à conduction électrique (14, 15).

2. Dispositif selon la revendication 1 **caractérisé en ce que** les structures à conduction électrique (14, 15) sont choisies du groupe qui comprend des éléments de constructions céramiques, des traverses en nanotubes de carbone, des couches à conduction électrique ou des combinaisons de ceux-ci.

3. Dispositif selon l'une des revendications précédentes **caractérisé en ce que** le premier capteur de température (10) et le capteur solaire (8) sont disposés dans un premier segment de boîtier (17) et le deuxième capteur de température (13) dans un deuxième segment de boîtier (20), le premier segment de boîtier (17) jouxtant le deuxième segment de boîtier (20).

4. Dispositif selon l'une des revendications précédentes **caractérisé en ce que** le premier capteur de température (10) et le capteur solaire (8) sont découplés thermiquement du deuxième capteur de température (13) par des interruptions (11.2) dans les bandes (3).

5. Dispositif selon l'une des revendications précédentes **caractérisé en ce que** le cadre conducteur (2) présente une première bande (3.1), une deuxième bande (3.2) et une troisième bande (3.3), le capteur solaire (8) se trouvant à l'extrémité de la première bande (3.1), le premier capteur de température (10) se trouvant à l'extrémité de la deuxième bande (3.2) et la troisième bande (3.3) étant associée par conduction électrique au capteur solaire (8) et au premier capteur de température (10).

6. Dispositif selon l'une des revendications 3 à 5 **caractérisé en ce que** les première, deuxième et troisième bandes (3.1, 3.2, 3.3) s'étendent du deuxième segment de boîtier (20) dans le premier segment de boîtier (17).

7. Dispositif selon l'une des revendications 3 à 6 **caractérisé en ce que** le cadre conducteur (2) présente une quatrième bande (3.4) qui ne s'étend pas du deuxième segment de boîtier (20) dans le premier segment de boîtier (17).

8. Dispositif selon l'une des revendications 2 à 7 **caractérisé en ce que** les traverses en nanotubes de carbone présentent une épaisseur de 50 à 500 nm.

9. Dispositif selon l'une des revendications précédentes **caractérisé en ce que** le cadre conducteur (2) est un grillage estampé.

10. Procédure de fabrication d'un dispositif selon la revendication 9, comprenant les opérations
(a) séparation de grillages estampés (2) à partir d'un matériau en bande d'un matériau à conduction électrique ;
(b) application des grillages estampés (2) sur le matériel-support non conducteur (4) ;
(c) réalisation d'interruptions (11, 12) dans les bandes de grillage estampé (3) ; et
(d) application du premier capteur de température (10), du deuxième capteur de température (13), du capteur solaire (8) et des structures à conduction électrique (14, 15) sur le grillage estampé (2).

11. Procédure selon la revendication 10 **caractérisée en ce qu'**en elle comprend l'opération :
(e) formation du premier segment de boîtier (17) qui enveloppe la section (6) des bandes (3) du grillage estampé (2) sur lequel se trouvent le premier capteur de température (10) et le capteur solaire (8) avec un premier matériau plastique optiquement transparent.

12. Procédure selon la revendication 10 ou la revendication 11 **caractérisée en ce qu'**elle comprend en plus l'opération :
(f) formation du deuxième segment de boîtier (20) qui enveloppe la section (7) des bandes du grillage estampé sur lequel se trouve le deuxième capteur de température avec un deuxième matériau plastique.
